Europäisches Patentamt

European Patent Office

Office européen des brevets

(11) Veröffentlichungsnummer: **0 275 984 B1**

# EUROPÄISCHE PATENTSCHRIFT

(45) Veröffentlichungstag der Patentschrift: **03.06.92**

(51) Int. Cl.5: **F02P 3/08**, F02P 1/08

(21) Anmeldenummer: **88100723.1**

(22) Anmeldetag: **20.01.88**

(54) **Kondensatorzündanlage, insbesondere für Benzinkleinmotoren, mit Spätverstellung.**

(30) Priorität: **22.01.87 DE 3701753**

(43) Veröffentlichungstag der Anmeldung:
**27.07.88 Patentblatt 88/30**

(45) Bekanntmachung des Hinweises auf die
Patenterteilung:
**03.06.92 Patentblatt 92/23**

(84) Benannte Vertragsstaaten:
**ES NL**

(56) Entgegenhaltungen:
**US-A- 3 941 110**
**US-A- 3 993 031**
**US-A- 4 566 425**

(73) Patentinhaber: **Prüfrex-Elektro-Apparatebau**
**Inh. Helga Müller, geb. Dutschke**
**Egersdorfer Strasse 36**
**W-8501 Cadolzburg 1(DE)**

(72) Erfinder: **Erhard, Werner**
**Ostlandstrasse 16**
**W-8501 Cadolzburg(DE)**
Erfinder: **Schuh, Josef**
**Meisenweg 121**
**W-8501 Cadolzburg(DE)**
Erfinder: **Reinhard, Peter**
**Forchheimer Strasse 10**
**W-8602 Strullendorf(DE)**

(74) Vertreter: **Patentanwälte Czowalla. Matschkur**
**& Partner**
**Dr.-Kurt-Schumacher-Strasse 23 Postfach**
**9109**
**W-8500 Nürnberg 11(DE)**

## Beschreibung

Die Erfindung bezieht sich auf eine Kondensatorzündanlage für Benzinkleinmotoren mit einem im Primärkreis der Zündspule angeordneten Ladekondensator, einer Ladespule, in welcher der Dauermagnet eines Polrades die Ladespannung induziert, und mit einem den Ladekondensator über die Primärwicklung der Zündspule entladenden elektronischen Zündschalter, insbesondere einen Thyristor, dessen von einer Auslöseschaltung angesteuerter Steuerkreis - zur Erzielung einer Spätverstellung - durch einen zweiten Kondensator in Serie mit einem Spätverstell-Schalter überbrückt ist, der über einen einer Ladespule parallelgeschalteten Verzögerungskondensator ansteuerbar ist, dem ein Begrenzungswiderstand parallelgeschaltet ist.

Kondensatorzündanlagen sind bereits seit vielen Jahren bekannt. Sie zeichnen sich aus durch einen sehr einfachen, robusten Aufbau. Bei der Vorbeibewegung des Dauermagneten des Polrades wird zunächst eine Spannung in der Ladespule induziert, die - über eine Diode - den Ladekondensator auflädt. Über unterschiedlich ausgestaltbare Auslöseschaltungen wird zu einem gewünschten Zeitpunkt nach vollständiger Aufladung des Ladekondensators dieser über die Primärwicklung der Zündspule entladen und damit in der Sekundärwicklung der gewünschte Zündimpuls induziert.

Derartige Kondensatorzündanlagen - man vergl. hierzu beispielsweise die US-Patentschriften 3,941,110 und 3,993,031 - haben im allgemeinen einen festen Zündzeitpunkt, dessen Lage durch die Versetzung der Zündimpulsspule gegenüber der Ladespule von vornherein festgelegt ist.

Darüber hinaus existieren selbstverständlich auch bereits Kondensatorzündanlagen mit Fremdtriggerung, bei der über aufwendige Elektroniken eine entsprechende Verstellung des Zündzeitpunktes möglich ist. Diese Zündanlagen sind jedoch wegen der notwendigen Verzögerungselektronik außerordentlich kompliziert aufgebaut, so daß sie insbesaondere für Benzinkleinmotoren schon aus wirtschaftlichen Gründen nicht einsetzbar sind.

Die Erfindung geht aus von einer älteren, erst nach dem Prioritätstag des vorliegenden Anmeldung veröffentlichten Anmeldung - DE-OS 36 10 934 - , in der bereits eine Kondensatorzündanlage der eingangs beschriebenen Art vorgeschlagen worden ist, bei der mit relativ einfachen Mitteln ab einer bestimmten Drehzahl eine selbsttätige Spätverstellung des Zündzeitpunktes mit steigender Drehzahl auftritt.

Als besonders aufwendig bei diesem älteren Vorschlag hat es sich dabei erwiesen, daß eine gesonderte zusätzliche Spule erforderlich ist, wie dies auch bei der Schaltung nach der DE-OS 29 47 570 der Fall ist.

Der Erfindung liegt daher die Aufgabe zugrunde, eine Kondensatorzündanlage der eingangs genannten Art so auszugestalten, daß - bei noch größerem Spätverstellbereich - der Einsatz einer gesonderten Spule vermieden wird.

Zur Lösung dieser Aufgabe ist erfindungsgemäß eine Kondensatorzündanlage der eingangs beschriebenen Art vorgesehen, wobei die Auslöseschaltung einen parallel zur Ladespule liegenden gesonderten Ladekondensator und einen parallelen Entladezweig aus Widerständen und einem vorzugsweise als Transistor ausgebildeten Sperrschalter mit einem zwischen ihnen angeordneten Abgriff zur Steuerelektrode des Zündschalters enthält, wobei der Sperrschalter während der Ladephase des Ladekondensators durchgeschaltet ist.

Durch die erfindungsgemäße Auslöseschaltung erfolgt die Ansteuerung des eigentlichen Zündschalters und daraus resultierend die Entladung des Ladekondensators am Ende der Ladespannungshalbwelle. Bevorzugt wird die Schaltung der Spulen so vorgenommen, daß die Zündung am Ende der zweiten (kräftigsten) Spannungshalbwelle der insgesamt drei vom Polrad bei jeder Umdrehung in jeder Spule induzierten Halbwellen erfolgt. Während der Ladephase liegt über dem durchgeschalteten Sperrschalter die Steuerelektrode des Zündschalters auf Masse, so daß eine Zündung unmöglich ist. Erst mit dem Abklingen der Ladehalbwelle - bevorzugt ist noch ein den Sperrschalter sicher über das Ende der Ladehalbwelle hinaus durchschaltender Sperrkondensator vorgesehen - wird durch den Übergang des Sperrkondensators in die Sperrstellung eine Entladung des gesonderten Ladekondensators über die Steuerstrecke des Zündschalters und damit dessen Durchschalten möglich.

Um den Sperrschalter während der Ladephase durchgeschalten zu halten, kann im einfachsten Fall vorgesehen sein, daß die Steuerelektrode des Sperrschalters über einen Widerstand mit der Ladespule des Ladekondensators verbunden ist.

Um auch noch den Nachteil zu vermeiden, daß im Startdrehzahlbereich des Motors der Zündzeitpunkt relativ früh liegt, kann man zusätzlich eine Trigger-Sperrsteuerung des Sperrschalters über einen vom Polradladeimpuls in der Primärwicklung der Zündspule betätigten Transistor am Steuerkreis des Sperrschalters vorsehen. Diese Triggerung nutzt die Tatsache aus, daß die in der Primärwicklung vom Dauermagneten erzeugten Spannungshalbwellen mit steigender Drehzahl steiler werden und somit eine Frühverstellung mit steigender Drehzahl erfolgt. Der eigentliche Zündzeitpunkt liegt also im Startbereich später als bei der Arbeitsdrehzahl.

Als besonders günstig hat es sich dabei in weiterer Ausgestaltung der Erfindung erwiesen, wenn die Primärwicklung der Zündspule die Ladespule des Verzögerungskondensators bildet, wobei mit weiterem Vorteil der Basis-Kollektor-Strecke des als Transistor ausgebildeten Spätverstellschalters ein Dämpfungskondensator parallelgeschaltet sein sollte.

Weitere Vorteile, Merkmale und Einzelheiten der Erfindung ergeben sich aus der nachfolgenden Beschreibung dreier Ausführungsbeispiele einer erfindungsgemäßen Kondensatorzündanlage sowie anhand der Zeichnung.

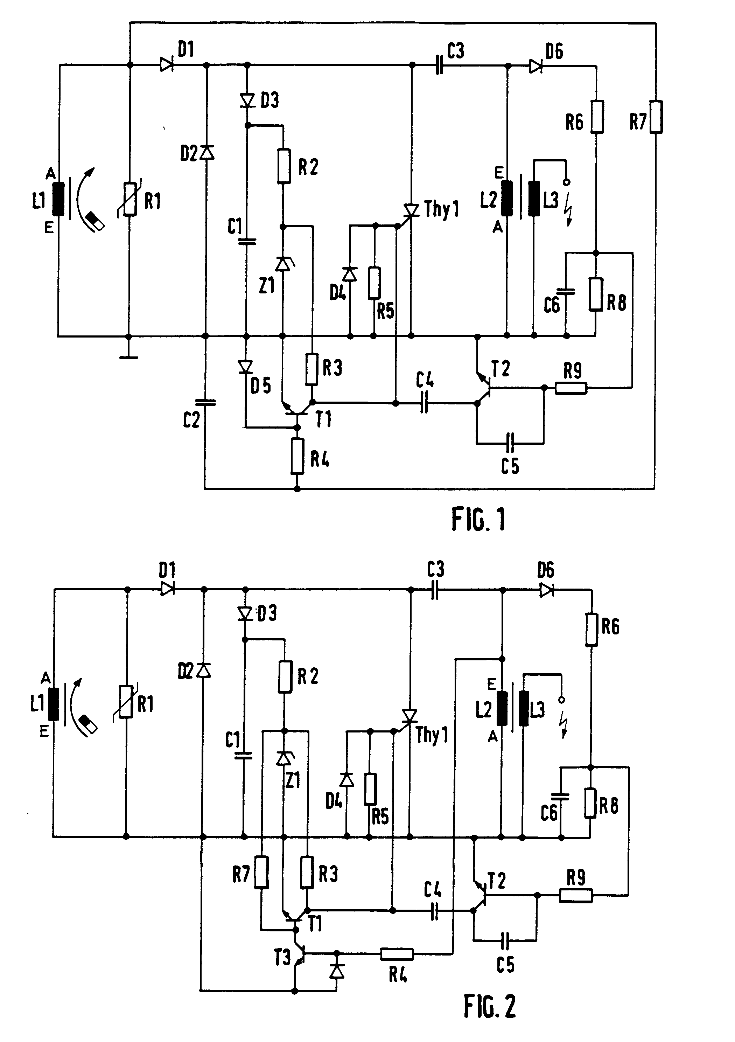

Bezugnehmend zunächst auf Fig. 1 erzeugt ein rotierender Dauermagnet M eines Polrades in den auf einem Eisenkern sitzenden Spulen, der Ladespule L1, der Primärwicklung L2 und der Sekundärwicklung L3 der Zündspule, jeweils drei Spannungshalbwellen. Die Ladespule L1 ist dabei so angeschlossen, daß die kräftigste, nämlich die zweite Spannungshalbwelle, am Ausgang A eine positive Spannung erzeugt. Mit der ansteigenden zweiten Spannungshalbwelle wird über den Widerstand R7 der einen Sperrschalter bildende Transistor T1 durchgeschaltet und dadurch das Gate des eigentlichen Zündschalters des Thyristors Thy 1 auf Masse gehalten. Erst wenn die zweite Spannungshalbwelle zu Ende und außerdem der aus Sicherheitsgründen noch zusätzlich vorgesehene Sperrkondensator C2 entladen ist, wird die Kollektor-Emitter-Strecke des Sperrschalters T1 hochohmig und der gesonderte Ladekondensator C1, der ebenfalls während der zweiten Spannungshalbwelle über die Diode D3 aufgeladen worden war, entlädt sich über die Widerstände R2, R3 am Gate des Thyristors. Dadurch wird der Thyristor Thy 1 gezündet und der Ladekondensator C3 entlädt sich über die Primärwicklung L2 der Zündspule. An der Sekundärseite der Zündspule entsteht ein Zündfunke.

Zur Erzielung der gewünschten Spätverstellung ist die Spule L2 so angeschlossen, daß die erste und dritte Halbwelle am Ausgang E der Spule L2 eine positive Spannung erzeugt. Diese Spannungsimpulse sind drehzahlabhängig, d.h. sie treten mit steigender Drehzahl in immer kürzeren Abständen auf, so daß der Kondensator C6 mit steigender Drehzahl immer weiter aufgeladen wird. Sobald die über den Widerstand R8 einstellbare Schwelle des Spätverstellschalters (Transistor T2) erreicht wird, schaltet dieser durch. Dadurch wird der über den Widerstand R3 ankommende Steuerimpuls für den Thyristor vom Kondensator C4 verzögert. Die Zündung erfolgt um so später, je kräftiger der Transistor T2 durchgeschaltet hat. So ist je nach Bemessung der Bauteile eine kontinuierliche Spätverstellung von etwa 50° erreichbar. Der Dämpfungskondensator C5 dämpft dabei die Schaltgeschwindigkeit des den Spätverstellschalter bildenden Transisotrs T2, wodurch die Verstellung immer kontiunierlich und ohne Verstellsprünge verläuft.

Ein besonderer Vorteil der vorstehend beschriebenen Kondensatorzündanlage nach Fig. 1 besteht darin, daß keine zusätzlichen Spulen benötigt werden und daß insbesondere die drehzahlabhängige Spannung direkt an der Primärspule der Zündspule über eine Diode D6 abgegriffen wird. Des weiteren ist es besonders günstig, die Anordnung der Spulen so vorzunehmen, daß die Zündung am Ende der zweiten Spannungshalbwelle, d.h. der jeweils kräftigsten der vom Polrad induzierten Halbwellen, erfolgt.

Bei einer Schaltung gemäß Fig. 1 der Zeichnung ergibt sich noch der Nachteil, daß im Startdrehzahlbereich des Motors der Zündzeitpunkt relativ früh liegt.

Verwendet man zur Triggerung die Primärspule der Zündspule, so wird dieser Nachteil beseitigt, weil die in der Primärspule von dem Dauermagneten erzeugten Spannungshalbwellen mit steigender Drehzahl steiler werden und so eine Frühverstellung mit steigender Drehzahl erfolgt. Der Zündzeitpunkt liegt also im Startbereich später als bei Arbeitsdrehzahl.

Eine Abwandlung der Schaltung nach Fig. 1 unter Ausnützung dieser Triggerung durch die Primärspule der Zündspule ist in Fig. 2 dargestellt.

Der Widerstand R7, der während der Aufladung des Ladekondensators C3 den den Sperrschalte bildenden Transistor T1 durchgeschaltet und dadurch eine Zündung verhindert hat, ist bei der Ausführungsform nach Fig. 2 an die Kathode der Zehnerdiode Z1 gelegt. Sobald die Primärspule L2 der Zündspule den Transistor T3 über den Widerstand R4 durchschaltet, wird der Sperrschalter (Transistor T1) gesperrt und eine Zündung ausgelöst. Die Verzögerung der Zündung durch den Kondensator C4 und den drehzahlabhängig mehr oder weniger durchgeschalteten Verzögerungsschalter T2 bleibt unverändert wie bei der Schaltung nach Fig. 1

Bei der Schaltung gemäß Fig. 2 kann die Zündung nur so lange verzögert werden, wie der Impuls der Primärspule L2 anhält. Dies ist in der Praxis manchmal noch zu kurz.

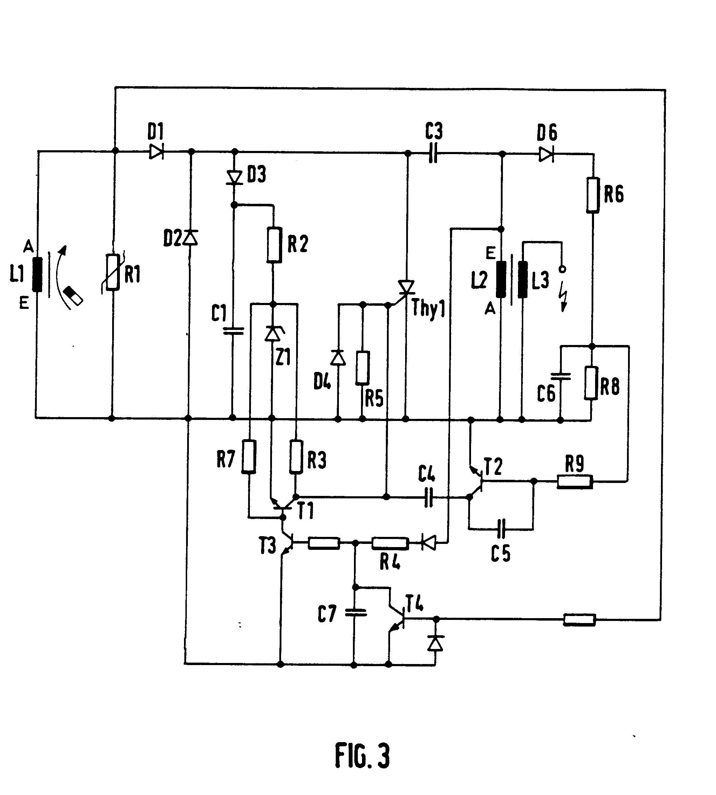

Unter Beibehaltung der Vorteile der Schaltung nach Fig. 2 (später Zündzeitpunkt bei Startdrehzahl), kann mit der Schaltung nach Fig. 3 eine größere Spätverstellung realisiert werden, weil der Impuls der Primärspule L2 den Kondensator C7 auflädt und dadurch so lange zum Durchschalten von T3 zur Verfügung steht, bis der Kondensator C7 wieder entladen ist. Dadurch kann die Spätverstellung wesentlich verlängert werden. Transistor T4 verhindert eine Zündung während des Aufladevorganges von C3.

**Patentansprüche**

1. Kondensatorzündanlage für Benzinkleinmotoren mit einem im Primärkreis der Zündspule angeordneten Ladekondensator (C3), einer Ladespule (LI), in welcher der Dauermagnet eines Polrades die Ladespannung induziert, und mit einem den Ladekondensator (C3) über die Primärwicklung der Zündspule entladenden elektronischen Zündschalter, insbesondere einen Thyristor (Thy1), dessen von einer Auslöseschaltung angesteuerter Steuerkreis - zur Erzielung einer Spätverstellung bis 40° nach oT - durch einen zweiten Kondensator (C4) in Serie mit einem Spätverstell-Schalter (T2) überbrückt ist, der über einen einer Ladespule parallelgeschalteten Verzögerungskondensator (C6) ansteuerbar ist, dem ein Begrenzungswiderstand (R8) parallelgeschaltet ist, wobei die Auslöseschaltung einen parallel zur Ladespule (L1) liegenden gesonderten Ladekondensator (C1) und einen parallelen Entladezweig aus Widerständen (R2, R3) und einen vorzugsweise als Transistor (T1) ausgebildeten Sperrschalter mit einem zwischen ihnen angeordneten Abgriff (A1) zur Steuerelektrode des Zündschalters (Thy1) enthält, wobei der Sperrschalter (T1) während der Ladephase des Ladekondensators (C3) durchgeschaltet ist.

2. Kondensatorzündanlage nach Anspruch 1, dadurch gekennzeichnet, daß die Steuerelektrode des Sperrschalters über einen Widerstand (R7) mit der Ladespule (L1) des Ladekondensators (C3) verbunden ist.

3. Kondensatorzündanlage nach Anspruch 2, gekennzeichnet durch einen den Sperrschalter sicher über das Ende der Ladehalbwelle hinaus durchgeschaltet haltenden Sperrkondensator (C2).

4. Kondensatorzündanlage nach einem der Ansprüche 1 bis 3, gekennzeichnet durch eine Trigger-Sperrsteuerung des Sperrschalters über einen vom Polradladeimpuls in der Primärwicklung der Zündspule betätigten Transistor (T3) am Steuerkreis des Sperrschalters.

5. Kondensatorzündanlage nach einem der Ansprüche 1 bis 4, gekennzeichnet durch einen die Durchschaltdauer des Transistors (13) erhöhenden, dessen Basis-emitterstrecke überbrückenden Kondensator (C7).

6. Kondensatorzündanlage nach Anspruch 5, gekennzeichnet durch einen die Zündung während des Aufladens des Ladekondensators (C3) verhindernden, von der Ladespule (L1) angesteuerten und dem Kondensator (C7) parallelgeschalteten Transistorschalter (T4).

7. Kondensatorzündanlage nach einem der Ansprüche 1 bis 6, dadurch gekennzeichnet, daß die Spulen derart geschaltet sind, daß die Zündung am Ende der (kräftigsten) zweiten Halbwelle der drei vom Polrad induzierten Halbwellen erfolgt.

8. Kondensatorzündanlage nach einem der Ansprüche 1 bis 7, dadurch gekennzeichnet, daß die Primärwicklung der Zündspule die Ladespule des Verzögerungskondensators bildet.

9. Kondensatorzündanlage nach einem der Ansprüche 1 bis 8, dadurch gekennzeichnet, daß der Basis-Kollektor-Strecke eines den Spätverstell-Schalter bildenden Transistors (T2) ein Dämpfungskondensator (C5) parallelgeschaltet ist.

**Claims**

1. Capacitive ignition installation, in particular for small petrol engines, having a charging capacitor (C3) mounted in the primary circuit of the ignition coil, a charging coil (L1), in which the permanent magnet of a magnet wheel induces the charging voltage, and having an electronic ignition switch, in particular a thyristor (Thy1), which discharges the charging capacitor (C3) via the primary winding of the ignition coil and whose control circuit actuated by a trip circuit - to obtain a retardation adjustment of up to 40° after oT - is bridged by a second capacitor (C4) in series with a retardation adjustment switch (T2), which is actuatable via a delay capacitor (C6) connected in parallel to a charging coil, a limit resistor (R8) being connected in parallel to said delay capacitor (C6), the trip circuit comprising a separate charging capacitor (C1) lying parallel to the charging coil (L1) and a parallel discharge branch composed of resistors (R2, R3) and a blocking switch, preferably formed as a transistor (T1) with a tap (A1) mounted between them to the control electrode of the ignition switch (Thy1), the blocking switch (T1) being switched through during the charging phase of the charging capacitor (C3).

2. Capacitive ignition installation according to claim 1, characterised in that the control electrode of the blocking switch is connected to the charging coil (L1) of the charging capacitor (C3) via a resistor (R7).

3. Capacitive ignition installation according to claim 2, characterised by a blocking capacitor (C2) securely switching the blocking switch through beyond the end of the charging half-wave.

4. Capacitive ignition installation according to one of claims 1 to 3, characterised by a trigger blocking control of the blocking switch via a transistor (T3) actuated by the magnet wheel charging pulse in the primary winding of the ignition coil on the control circuit of the blocking switch.

5. Capacitive ignition installation according to one of claims 1 to 4, characterised by a capacitor (C7) which increases the switch-through duration of the transistor (13) and bridges its base-emitter section.

6. Capacitive ignition installation according to claim 5, characterised by a transistor switch (T4) actuated by the charging coil (L1) and connected in parallel to the condenser (C7), and preventing ignition during charging of the charging capacitor (C3).

7. Capacitive ignition installation according to one of claims 1 to 6, characterised in that the coils are so connected that ignition takes place at the end of the (most powerful) second half-wave of the three half-waves induced by the magnet wheel.

8. Capacitive ignition installation according to one of claims 1 to 7, characterised in that the primary winding of the ignition coil forms the charging coil of the delay capacitor.

9. Capacitive ignition installation according to one of claims 1 to 8, characterised in that the base-collector section of a transistor (T2) forming the retardation adjustment switch is connected in parallel to a damping capacitor (C5).

## Revendications

1. Installation d'allumage à condensateur pour de petits moteurs à essence, comportant un condensateur de charge (C3) agencé dans le circuit primaire de la bobine d'allumage, une bobine de charge (L1) dans laquelle l'aimant permanent d'une roue polaire induit la tension de charge, ainsi qu'un interrupteur électronique, notamment un thyristor (Thy1), qui décharge le condensateur de charge (C3) par l'intermédiaire de l'enroulement primaire de la bobine d'allumage, et dont le circuit de commande commandé par un circuit de déclenchement est ponté, en vue d'obtenir un ajustement de retard à l'allumage jusqu'à 40° après le point mort haut, par un seconde condensateur (C4) en série avec un interrupteur d'ajustement de retard (T2) qui peut être commandé par un condensateur de temporisation (C6) mis en circuit en parallèle à une bobine de charge et auquel est mis en circuit en parallèle une résistance de limitation (R8), le circuit de déclenchement comportant là un condensateur de charge séparé (C1) se trouvant en parallèle à la bobine de charge (L1), et une branche de décharge en parallèle composée de résistances (R2, R3) et d'un interrupteur de blocage de préférence sous la forme d'un transistor (T1), avec, agencé entre-eux, un piquage (A1) vers l'électrode de commande de l'interrupteur d'allumage (Thy1), l'interrupteur de blocage (T1) étant passant pendant la phase de charge du condensateur de charge (C3).

2. Installation d'allumage à condensateur selon la revendication 1, caractérisée en ce que l'électrode de commande de l'interrupteur de blocage est reliée, par l'intermédiaire d'une résistance (R7), à la bobine de charge (L1) du condensateur de charge (C3).

3. Installation d'allumage à condensateur selon la revendication 2, caractérisée par un condensateur de blocage (C2) qui maintient de manière sûre l'interrupteur de blocage passant, au-delà de la demi-onde de charge.

4. Installation d'allumage à condensateur selon l'une des revendications 1 à 3, caractérisée par une commande de blocage à déclenchement de l'interrupteur de blocage, par l'intermédiaire d'un transistor (T3) situé dans le circuit de commande de l'interrupteur de blocage et actionné par une impulsion de charge de roue polaire dans l'enroulement primaire de la bobine d'allumage.

5. Installation d'allumage à condensateur selon l'une des revendications 1 à 4, caractérisée par un condensateur (C7) augmentant la durée de l'état passant du transistor (T3) et pontant son segment base-émetteur.

6. Installation d'allumage à condensateur selon la revendication 5, caractérisée par un interrupteur à transistor (T4) mis en circuit en parallèle au condensateur (C7), commandé par la bobine de charge (L1) et empêchant l'allumage pendant la charge du condensateur de charge (C3).

7. Installation d'allumage à condensateur selon l'une des revendications 1 à 6, caractérisée en ce que les bobines sont mises en circuit de façon à ce que l'allumage se produise à la fin de la seconde demi-onde (la plus puissante) des trois demi-ondes induites par la roue polaire.

8. Installation d'allumage à condensateur selon l'une des revendications 1 à 7, caractérisée en ce que l'enroulement primaire de la bobine d'allumage constitue la bobine de charge du condensateur de temporisation.

9. Installation d'allumage à condensateur selon l'une des revendications 1 à 8, caractérisée en ce qu'un condensateur d'amortissement (C 5) est mis en circuit en parallèle au segment base-collecteur d'un transistor (T2) constituant l'interrupteur d'ajustement de retard à l'allumage.

FIG. 1

FIG. 2

7

FIG. 3